# EUROPÄISCHE PATENTANMELDUNG

(11) **EP 4 458 623 A1**
(43) Veröffentlichungstag der Anmeldung: **06.11.2024**
(21) Anmeldenummer: 23171621.8
(22) Anmeldetag: 04.05.2023
(51) Int. Cl.: B60R 22/18

(54) **GURTSYSTEM UND VERFAHREN ZUR MONTAGE EINES GURTSYSTEMS**

(71) Anmelder: Autoflug GmbH, 25462 Rellingen (DE)
(72) Erfinder: Reichard, Karsten, 25358 Horst (DE); Schmidt, Volker, 22846 Norderstedt (DE)
(74) Vertreter: Feucker, Max Martin

(57) **Zusammenfassung**

Die Erfindung betrifft ein Verfahren zur Montage eines Gurtsystems und ein Gurtsystem, umfassend ein Gurtband (11), wobei das Gurtband (11) ein freies Ende (11.1) aufweist, eine Aufnahme (13), mit der das Gurtband (11) verbunden ist, wobei die Aufnahme (13) eine Aufnahmeöffnung (13.1) aufweist, eine Gurtverankerung (10) mit einer Gurtverankerungsöffnung (10.1) und ein an dem freien Ende (11.1) des Gurtbandes (11) angeordnetes Fixierungselement (12), wobei die Gurtverankerung (10) zumindest teilweise in der Aufnahmeöffnung (13.1) angeordnet ist und das an dem freien Ende (11.1) des Gurtbandes (11) angeordnete Fixierungselement (12) so in der Gurtverankerung (10) angeordnet ist, dass die Gurtverankerung (10) durch das Fixierungselement (12) gegen eine Herausnahme aus der Aufnahmeöffnung (13.1) gesichert ist.

## Beschreibung

Die vorliegende Erfindung betrifft ein Gurtsystem und ein Verfahren zur Montage eines Gurtsystems. Die Erfindung betrifft insbesondere ein Gurtsystem für ein Fahrzeug und insbesondere für ein Luftfahrzeug. Das Gurtsystem umfasst ein Gurtband mit einem freien Ende. An dem dem freien Ende gegenüberliegenden Ende des Gurtbandes kann beispielsweise eine Gurtzunge oder ein Gurtschloss angebracht sein. Das Gurtsystem umfasst zudem eine Aufnahme, mit der das freie Ende des Gurtbandes verbunden ist. Die Aufnahme weist hierzu eine Aufnahmeöffnung auf, durch die das Gurtband hindurchgeführt ist. Die Aufnahme wird durch ein fest in dem Fahrzeug angebrachtes Bauteil verwirklicht. Beispielsweise kann die Aufnahme durch ein Beschlagteil realisiert sein, welches fest in dem Fahrzeug angebracht ist. Die Aufnahme kann aber auch unmittelbar an einem Element eines Sitzes angebracht sein. In einem anderen Anwendungsfall kann das Gurtsystem an einer Krankentrage ausgebildet sein. Die Aufnahmeöffnung ist insbesondere im ebenen und damit plattenförmigen Bereich der Aufnahme ausgebildet.

Aus dem Stand der Technik sind Gurtsysteme bekannt, bei denen das freie Ende des Gurtbandes eine (textile) Schlaufe ausbildet, welche zur Montage von einer Vorderseite der Aufnahme durch die Aufnahmeöffnung durchgeführt wird, wobei auf einer Rückseite der Aufnahme ein Stift in die Schlaufe eingesetzt wird, so dass das freie Ende mit dem darin angebrachten Stift nicht mehr zurück durch die Aufnahmeöffnung der Aufnahme gezogen werden kann, wodurch das Gurtband mit der Aufnahme verbunden ist. So offenbaren beispielsweise EP 1 557 327 A1 und US 2,932,871 jeweils, dass ein stiftförmiges Element auf einer Rückseite eines Beschlagteils durch eine am freien Ende des Gurtbandes ausgebildete Schlaufe hindurchgeführt ist, so dass die Schlaufe nicht mehr zurück auf die Vorderseite des Beschlagteils gezogen werden kann.

Bei diesen Lösungen muss also die Rückseite der Aufnahme zum Anbringen des Stiftes zugänglich sein, wodurch einerseits das Anwendungsgebiet solcher Gurtbefestigungen beschränkt ist und wodurch andererseits der Montageaufwand groß ist.

Aufgabe der vorliegenden Erfindung ist es daher, die mit Bezug zum Stand der Technik geschilderten Nachteile zu lösen und insbesondere ein Verfahren zur Montage eines Gurtsystems und ein Gurtsystem anzugeben, mit denen der Montageaufwand verringert werden kann und der Anwendungsfall erweitert werden kann.

Gelöst wird diese Aufgabe insbesondere durch ein Verfahren mit den Merkmalen des Anspruchs 1 und ein Gurtsystem mit den Merkmalen des Anspruchs 2. Vorteilhafte Weiterbildungen des Verfahrens und des Gurtsystems sind in der vorstehenden und nachfolgenden Beschreibung sowie in den Unteransprüchen angegeben, wobei einzelne Merkmale der Weiterbildungen in technisch sinnvoller Weise miteinander kombinierbar sind. Mit Bezug zum Gurtsystem offenbarte Merkmale und Vorteile sind auf das Verfahren anwendbar und umgekehrt.

Gelöst wird die Aufgabe insbesondere durch ein Verfahren zur Montage eines Gurtsystems, welches zumindest die folgenden Schritte umfasst:
- Bereitstellen eines Gurtbandes, wobei das Gurtband ein freies Ende aufweist,
- Bereitstellen einer Gurtverankerung, wobei die Gurtverankerung eine Gurtverankerungsöffnung aufweist,
- Bereitstellen einer Aufnahme, wobei die Aufnahme eine Aufnahmeöffnung umfasst,
- Bereitstellung eines Fixierungselements,
- Durchführen des freien Endes des Gurtbandes durch die Gurtverankerungsöffnung der Gurtverankerung,
- Anbringen des Fixierungselements an dem freien Ende des durch die Gurtverankerungsöffnung geführten Gurtbandes,
- Durchführen des an dem freien Ende des Gurtbandes angebrachten Fixierungselements durch die Aufnahmeöffnung der Aufnahme,
- Einbringen der Gurtverankerung in die Aufnahmeöffnung der Aufnahme, wobei das Gurtband durch die Aufnahmeöffnung hindurchgeführt ist,
- Zurückziehen des an dem freien Ende des Gurtbandes angebrachten Fixierungselements in die in der Aufnahmeöffnung eingebrachte Gurtverankerung, wodurch die Gurtverankerung durch das Fixierungselement gegen eine Herausnahme aus der Aufnahmeöffnung gesichert wird.

Die Aufgabe wird auch gelöst durch ein Gurtsystem, welches ein Gurtband, eine Aufnahme, eine Gurtverankerung und ein Fixierungselement umfasst, wobei das Gurtband ein freies Ende aufweist, die Aufnahme eine Aufnahmeöffnung aufweist und die Gurtverankerung eine Gurtverankerungsöffnung aufweist und das Fixierungselement an dem freien Ende des Gurtbandes angeordnet ist. Die Gurtverankerung ist zumindest teilweise in der Aufnahmeöffnung angeordnet, wobei das an dem freien Ende des Gurtbandes angeordnete Fixierungselement so in der Gurtverankerung angeordnet ist, dass die Gurtverankerung durch das Fixierungselement gegen ein Herausnehmen aus der Aufnahmeöffnung gesichert ist. Das Gurtband erstreckt sich hierbei durch die Gurtverankerungsöffnung hindurch.

Mit anderen Worten: Die Erfindung sieht in ihrem Grundgedanken vor, dass mit der Gurtverankerung ein zusätzliches Bauteil bereitgestellt wird, durch welches hindurch das freie Ende des Gurtbandes geführt werden kann, bevor die Gurtverankerung in die Aufnahmeöffnung eingebracht wird. Bevor die Gurtverankerung in die Aufnahmeöffnung eingebracht wird, wird das Fixierungselement an dem freien Ende des Gurtbandes angeordnet und das mit dem freien Ende des Gurtbandes verbundene Fixierungselement durch die Aufnahmeöffnung hindurchgeführt. Anschließend wird die Gurtverankerung in die Aufnahmeöffnung eingebracht und das mit dem freien Ende verbundene Fixierungselement zurückgezogen, so dass es in der Gurtverankerung angeordnet ist. Das freie Ende mit dem Fixierungselement ist dabei derart in der Gurtverankerung angeordnet, dass die Gurtverankerung gegen ein Herausnehmen aus der Aufnahmeöffnung gesichert ist. Es ist somit nicht länger erforderlich, dass die Aufnahme von ihrer Rückseite zugänglich ist, da das Fixierungselement auf einer Vorderseite der Aufnahme an dem freien Ende des Gurtbandes angebracht werden kann und daraufhin sowohl das freie Ende mit dem Fixierungselement und die Gurtverankerung von der Vorderseite in die Aufnahmeöffnung einbringbar sind. Somit ist einerseits die Montage des Gurtsystems vereinfacht und andererseits kann das Gurtsystem auch an Stellen ausgebildet sein, an denen die Aufnahme nicht von ihrer Rückseite aus zugänglich ist.

Die Aufnahmeöffnung, das freie Ende des Gurtbandes und das Fixierungselement sind insbesondere so dimensioniert, dass das freie Ende mit dem daran angebrachten Fixierungselement durch die Aufnahmeöffnung hindurchführbar ist. Gleichzeitig ist ein Abschnitt der Gurtverankerung so ausgebildet, dass er in einem Zustand, in dem das freie Ende des Gurtbandes mit dem Fixierungselement nicht in dem Abschnitt angeordnet ist und in dem das Gurtband aber bereits durch die Gurtverankerungsöffnung hindurchgeführt ist, in die Aufnahmeöffnung einbringbar ist. Zudem ist der in oder durch die Aufnahmeöffnung einbringbare Abschnitt der Gurtverankerung so ausgebildet, dass er das Fixierungselement und das freie Ende des Gurtbandes aufnehmen kann, wobei in dem aufgenommenen Zustand die Gurtverankerung durch eine kraft- und/oder formschlüssige Verbindung mit der Aufnahme gegen eine Herausnahme gesichert ist.

In einer Ausführungsform weist der Abschnitt der Gurtverankerung beziehungsweise die Gurtverankerung mindestens einen in und/oder durch die Gurtverankerungsöffnung greifenden Federarm auf, der durch das Fixierungselement gegen eine Auslenkung gesichert ist. Der mindestens eine Federarm ist insbesondere so angeordnet und ausgebildet, dass der Federarm beim Einbringen der Gurtverankerung in die Aufnahmeöffnung elastisch ausgelenkt wird, wobei in einem Zustand, in dem das Fixierungselement in der Gurtverankerung angeordnet ist, der mindestens eine Federarm gegen eine elastische Auslenkung durch das Fixierungselement gesichert ist. Das mindestens eine Fixierungselement liegt dabei an dem Federarm (gegebenenfalls mit dem dazwischen angeordneten freien Ende des Gurtbandes) an. Das Fixierungselement ist dabei bevorzugt in einem Bereich an der Gurtverankerung angeordnet, die über die Rückseite der Aufnahme hervorsteht.

In diesem Zusammenhang kann ferner vorgesehen sein, dass der mindestens eine Federarm auf seiner dem Gurtband zugewandten Innenseite eine Vertiefung für das Fixierungselement aufweist. Durch eine solche Vertiefung ist einerseits eine konkrete Stellung für das Fixierungselement vorgegeben und andererseits wird beim Zurückziehen des Gurtbandes durch eine Einrastung dem Monteur signalisiert, dass das Fixierungselement in seiner vorgesehenen Stellung ist.

Zur formschlüssigen Festlegung der Gurtverankerung an der Aufnahme kann vorgesehen sein, dass der mindestens eine Federarm an seinem freien Ende auf einer dem Gurtband abgewandten Außenseite einen Vorsprung aufweist, der auf einer Rückseite der Aufnahme anliegt.

Beim Einbringen der Gurtverankerung in die Aufnahmeöffnung wird das freie Ende des Federarms mit dem Vorsprung nach innen ausgelenkt, wobei nach Erreichen der Endposition der Federarm nach außen zurückgelenkt werden kann, wodurch der Vorsprung auf der Rückseite der Aufnahme zur Anlage kommt. Der Vorsprung am freien Ende der Gurtverankerung ist dabei mit dem auf der Vorderseite der Aufnahme anliegenden Anlageabschnitt mit einem Abstand beabstandet, der mit der Dicke der Aufnahme korrespondiert. Der somit hakenförmig ausgebildete Federarm bedingt somit auch eine Art Klickverbindung, die dem Monteur signalisiert, dass die Gurtverankerung in der bestimmungsgemäßen Stellung eingebracht wurde.

Das als Gurtverankerung bezeichnete Bauteil ist insbesondere einteilig ausgebildet. Bevorzugt sind mindestens zwei Federarme vorgesehen, die insbesondere auf gegenüberliegenden Seiten der Gurtverankerungsöffnung angeordnet sind.

Die Gurtverankerung weist insbesondere einen Anlageabschnitt auf, der mit einer Oberfläche beim Einbringen der Gurtverankerung auf der Vorderseite der Aufnahme zur Anlage kommt und somit im montierten Zustand an der Vorderseite der Aufnahme anliegt. Von diesem Anlageabschnitt erstrecken sich bevorzugt die Federarme durch die Aufnahmeöffnung hindurch.

Prinzipiell könnte ein beispielsweise kugelförmiges, quaderförmiges oder stiftförmiges Fixierungselement auf geeignete Weise an dem freien Ende des Gurtbandes angebracht sein.

Für eine einfache und schnelle Montage ist jedoch bevorzugt, dass das freie Ende des Gurtbandes eine Schlaufe ausbildet, die in ihrer Dimensionierung so auf ein stiftförmiges (insbesondere mit einem kreisförmigen Querschnitt) Fixierungselement abgestimmt ist, dass der Stift passgenau in die Schlaufe des Gurtbandes eingeschoben ist.

Die Erfindung sowie das technische Umfeld werden im Folgenden anhand der Figuren beispielhaft erläutert. Es zeigen schematisch
Figuren 1a bis 1e: Schritte eines Verfahrens zur Montage eines Gurtsystems,
Figur 2: eine Querschnittsansicht durch das montierte Gurtsystem.

Das in den Figuren dargestellte zu montierende Gurtsystem beziehungsweise montierte Gurtsystem umfasst ein Gurtband 11 mit einem als Schlaufe 11.2 ausgebildeten freien Ende 11.1.

Das Gurtband 11 wird mit einer plattenförmigen Aufnahme 13 verbunden, in der eine Aufnahmeöffnung 13.1 ausgebildet ist, wobei sich die Aufnahmeöffnung von einer Vorderseite 13.2 zu einer Rückseite 13.3 der Aufnahme 13 erstreckt.

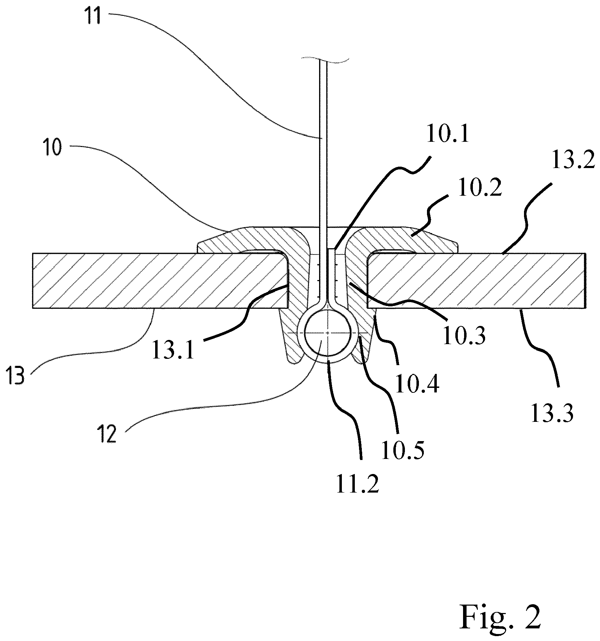

Das Gurtsystem umfasst zudem ein als Gurtverankerung 10 bezeichnetes Bauteil. Die Gurtverankerung 10 weist einen Anlageabschnitt 10.2 und sich von dem Anlageabschnitt 10.2 erstreckende Federarme 10.3 auf. Die Gurtverankerung 10 bildet zudem eine Gurtverankerungsöffnung 10.1 aus. Wie insbesondere aus der Schnittdarstellung der Figur 2 zu erkennen ist, weisen die Federarme 10.3 auf ihrer Außenseite einen Vorsprung 10.4 und auf ihrer Innenseite eine Vertiefung 10.5 auf.

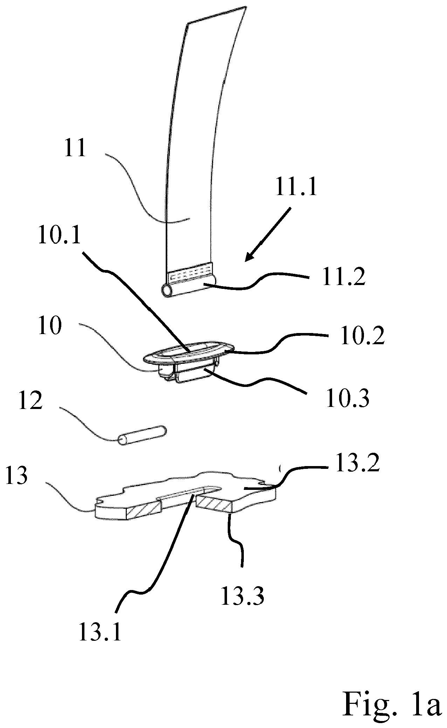

In Figur 1a ist der Ausgangszustand vor der Montage dargestellt.

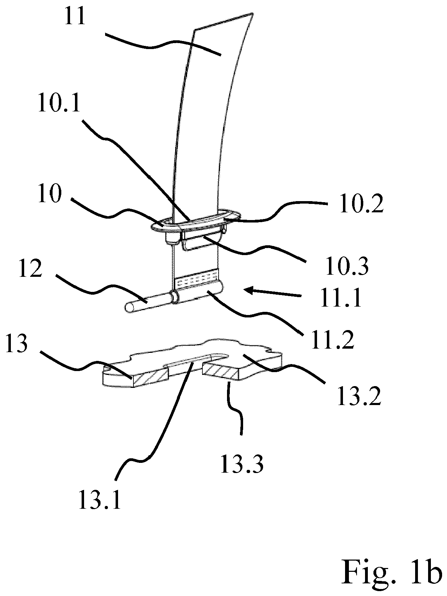

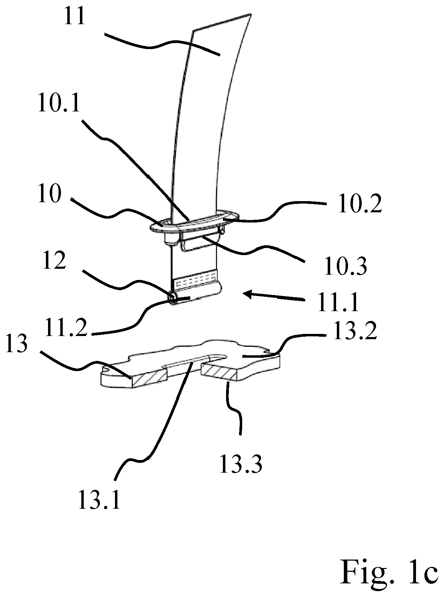

In einem ersten Schritt (siehe insbesondere Figur 1b) wird das durch die Schlaufe 11.2 ausgebildete freie Ende 11.1 des Gurtbandes 11 durch die Gurtverankerungsöffnung 10.1 der Gurtverankerung 10 hindurchgeführt, so dass in einem nächsten Schritt der Stift 12 in die Schlaufe 11.2 eingeschoben werden kann (siehe Figur 1c).

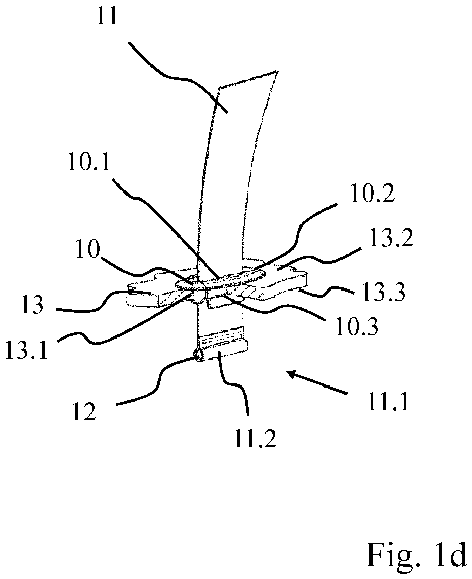

In einem folgenden Schritt wird dann zunächst die Schlaufe 11.2 mit dem darin eingeschobenen Stift 12 durch die Aufnahmeöffnung 13.1 der Aufnahme 13 hindurchgeführt, wobei daraufhin die Gurtverankerung 10 in die Aufnahmeöffnung 13.1 der Aufnahme 13 eingebracht wird. Beim Einbringen der Gurtverankerung 10 in die Aufnahmeöffnung 13.1 werden die Federarme 10.3 nach innen in Richtung des Gurtbandes 11 ausgelenkt, bis der Anlageabschnitt 10.2 auf der Vorderseite 13.2 der Aufnahme 13 zu liegen kommt und die Federarme 10.3 zurückfedern, so dass die Vorsprünge 10.4 die Aufnahme 13 hintergreifen und auf der Rückseite 13.3 der Aufnahme 13 zur Anlage kommen (siehe Figur 1d).

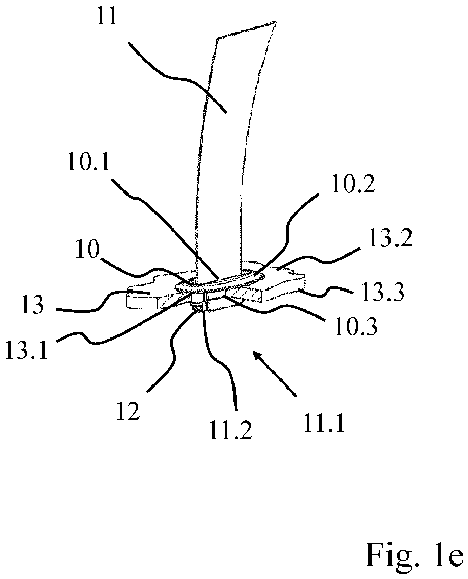

Im Folgenden wird dann noch das Gurtband 11 zurückgezogen, wodurch die Schlaufe 11.2 mit dem darin angeordneten Stift 12 zwischen die Federarme 10.3 gezogen wird. Hierbei gelangen die Schlaufe 11.2 und der Stift 12 in in den Federarmen 10.3 ausgebildeten Vertiefungen 10.5 (siehe Figur 1e und Figur 2).

Durch die Anordnung des Stifts 12 zwischen den Federarmen 10.3 werden die Federarme 10.3 an einer Auslenkung nach innen in Richtung des Gurtbandes 11 gehindert, wodurch die Gurtverankerung 10 gegen ein Herausnehmen aus der Aufnahmeöffnung 13.1 gesichert ist.

Die Erfindung ermöglicht somit eine einfache Montage eines Gurtsystems, die nur von der Vorderseite der Aufnahme 10 möglich ist.

### Bezugszeichenliste

- 10: Gurtverankerung
- 10.1: Gurtverankerungsöffnung
- 10.2: Anlageabschnitt
- 10.3: Federarm
- 10.4: Vorsprung
- 10.5: Vertiefung
- 11: Gurtband
- 11.1: freies Ende
- 11.2: Schlaufe
- 12: Stift
- 13: Aufnahme
- 13.1: Aufnahmeöffnung
- 13.2: Vorderseite
- 13.3: Rückseite

## Patentansprüche

1. Verfahren zur Montage eines Gurtsystems, umfassend zumindest die folgenden Schritte:
- Bereitstellen eines Gurtbandes (11) mit einem freien Ende (11.1), einer Gurtverankerung (10) mit einer Gurtverankerungsöffnung (10.1), einer Aufnahme (13) mit einer Aufnahmeöffnung (13.1) und eines Fixierungselements (12),
- Durchführen des freien Endes (11.1) des Gurtbandes (11) durch die Gurtverankerungsöffnung (10.1) der Gurtverankerung (10),
- Anbringen des Fixierungselements (12) an dem freien Ende (11.1) des durch die Gurtverankerungsöffnung (10.1) geführten Gurtbandes (10),
- Durchführen des an dem freien Ende (11.1) des Gurtbandes (11) angebrachten Fixierungselements (12) durch die Aufnahmeöffnung (13.1) der Aufnahme (13),
- Einbringen der Gurtverankerung (10) in die Aufnahmeöffnung (13.1) der Aufnahme (13),
- Zurückziehen des an dem freien Ende (11.1) des Gurtbandes (11) angebrachten Fixierungselements (12) in die in der Aufnahmeöffnung (13.1) eingebrachte Gurtverankerung (10), wodurch die Gurtverankerung (10) durch das Fixierungselement (12) gegen eine Herausnahme aus der Aufnahmeöffnung (13.1) gesichert wird.

2. Gurtsystem, umfassend
- ein Gurtband (11), wobei das Gurtband (11) ein freies Ende (11.1) aufweist,
- eine Aufnahme (13), mit der das Gurtband (11) verbunden ist, wobei die Aufnahme (13) eine Aufnahmeöffnung (13.1) aufweist,
- eine Gurtverankerung (10) mit einer Gurtverankerungsöffnung (10.1) und
- ein an dem freien Ende (11.1) des Gurtbandes (11) angeordnetes Fixierungselement (12), wobei
• die Gurtverankerung (10) zumindest teilweise in der Aufnahmeöffnung (13.1) angeordnet ist und
• das an dem freien Ende (11.1) des Gurtbandes (11) angeordnete Fixierungselement (12) so in der Gurtverankerung (10) angeordnet ist, dass die Gurtverankerung (10) durch das Fixierungselement (12) gegen eine Herausnahme aus der Aufnahmeöffnung (13.1) gesichert ist.

3. Gurtsystem nach Anspruch 2, wobei die Gurtverankerung (10) mindestens einen in und/oder durch die Gurtverankerungsöffnung (10.1) greifenden Federarm (10.3) aufweist, der durch das Fixierungselement (12) gegen eine Auslenkung gesichert ist.

4. Gurtsystem nach Anspruch 3, wobei der mindestens eine Federarm (10.3) auf seiner dem Gurtband (11) zugewandten Innenseite eine Vertiefung (10.5) für das Fixierungselement (12) aufweist.

5. Gurtsystem nach Anspruch 3 oder 4, wobei der mindestens eine Federarm (10.3) an seinem freien Ende auf einer dem Gurtband (11) abgewandten Außenseite einen Vorsprung (10.4) aufweist, der auf einer Rückseite (13.1) der Aufnahme (13) anliegt.

6. Gurtsystem nach einem der vorhergehenden Ansprüche, wobei die Gurtverankerung (10) einen Anlageabschnitt (10.2) aufweist, der auf einer Vorderseite (13.2) der Aufnahme (13) anliegt.

7. Gurtsystem nach einem der vorhergehenden Ansprüche, wobei die Aufnahme (13) einen plattenförmigen Abschnitt umfasst, in dem die Aufnahmeöffnung (13.1) ausgebildet ist.

8. Gurtsystem nach einem der vorhergehenden Ansprüche, wobei das freie Ende (11.1) des Gurtbandes (11) eine Schlaufe (11.2) ausbildet.

9. Gurtsystem nach einem der vorhergehenden Ansprüche, wobei das Fixierungselement ein Stift (12) ist, der insbesondere passgenau in die Schlaufe (11.2) des Gurtbandes (11) eingeschoben ist.

## Geänderte Patentansprüche

### Geänderte Patentansprüche gemäss Regel 137(2) EPÜ.

1. Verfahren zur Montage eines Gurtsystems, umfassend zumindest die folgenden Schritte:
- Bereitstellen eines Gurtbandes (11) mit einem freien Ende (11.1), einer Gurtverankerung (10) mit einer Gurtverankerungsöffnung (10.1), einer Aufnahme (13) mit einer Aufnahmeöffnung (13.1) und eines Fixierungselements (12),
- Durchführen des freien Endes (11.1) des Gurtbandes (11) durch die Gurtverankerungsöffnung (10.1) der Gurtverankerung (10),
- Anbringen des Fixierungselements (12) an dem freien Ende (11.1) des durch die Gurtverankerungsöffnung (10.1) geführten Gurtbandes (10),
- Durchführen des an dem freien Ende (11.1) des Gurtbandes (11) angebrachten Fixierungselements (12) durch die Aufnahmeöffnung (13.1) der Aufnahme (13),
- Einbringen der Gurtverankerung (10) in die Aufnahmeöffnung (13.1) der Aufnahme (13),
- Zurückziehen des an dem freien Ende (11.1) des Gurtbandes (11) angebrachten Fixierungselements (12) in die in der Aufnahmeöffnung (13.1) eingebrachte Gurtverankerung (10), wodurch die Gurtverankerung (10) durch das Fixierungselement (12) gegen eine Herausnahme aus der Aufnahmeöffnung (13.1) gesichert wird.

2. Gurtsystem, umfassend
- ein Gurtband (11), wobei das Gurtband (11) ein freies Ende (11.1) aufweist,
- eine Aufnahme (13), mit der das Gurtband (11) verbunden ist, wobei die Aufnahme (13) eine Aufnahmeöffnung (13.1) aufweist,
- eine Gurtverankerung (10) mit einer Gurtverankerungsöffnung (10.1) und
- ein an dem freien Ende (11.1) des Gurtbandes (11) angeordnetes Fixierungselement (12), wobei
• die Gurtverankerung (10) zumindest teilweise in der Aufnahmeöffnung (13.1) angeordnet ist und
• das an dem freien Ende (11.1) des Gurtbandes (11) angeordnete Fixierungselement (12) so in der Gurtverankerung (10) angeordnet ist, dass die Gurtverankerung (10) durch das Fixierungselement (12) gegen eine Herausnahme aus der Aufnahmeöffnung (13.1) gesichert ist,
wobei die Gurtverankerung (10) einen Anlageabschnitt (10.2) aufweist, der auf einer Vorderseite (13.2) der Aufnahme (13) anliegt.

3. Gurtsystem nach Anspruch 2, wobei die Gurtverankerung (10) mindestens einen in und/oder durch die Gurtverankerungsöffnung (10.1) greifenden Federarm (10.3) aufweist, der durch das Fixierungselement (12) gegen eine Auslenkung gesichert ist.

4. Gurtsystem nach Anspruch 3, wobei der mindestens eine Federarm (10.3) auf seiner dem Gurtband (11) zugewandten Innenseite eine Vertiefung (10.5) für das Fixierungselement (12) aufweist.

5. Gurtsystem nach Anspruch 3 oder 4, wobei der mindestens eine Federarm (10.3) an seinem freien Ende auf einer dem Gurtband (11) abgewandten Außenseite einen Vorsprung (10.4) aufweist, der auf einer Rückseite (13.1) der Aufnahme (13) anliegt.

6. Gurtsystem nach einem der vorhergehenden Ansprüche, wobei die Aufnahme (13) einen plattenförmigen Abschnitt umfasst, in dem die Aufnahmeöffnung (13.1) ausgebildet ist.

7. Gurtsystem nach einem der vorhergehenden Ansprüche, wobei das freie Ende (11.1) des Gurtbandes (11) eine Schlaufe (11.2) ausbildet.

8. Gurtsystem nach einem der vorhergehenden Ansprüche, wobei das Fixierungselement ein Stift (12) ist, der insbesondere passgenau in die Schlaufe (11.2) des Gurtbandes (11) eingeschoben ist.
